# EUROPEAN PATENT SPECIFICATION

(11) **EP 0 752 537 B1**
(45) Date of publication and mention of the grant of the patent: **06.02.2002**
(21) Application number: 96304970.5
(22) Date of filing: 05.07.1996
(51) Int. Cl.: F16C 19/08, F16C 33/60

(54) **Compound bearing assembly and method of manufacturing the same**
Zusammengesetzte Lagereinheit und Verfahren zu deren Herstellung
Unité de palier composé et son procédé de fabrication

(30) Priority: 07.07.1995 JP 19613995; 07.07.1995 JP 19614095
(43) Date of publication of application: 08.01.1997
(73) Proprietor: MINEBEA KABUSHIKI-KAISHA, Kitasaku-gun, Nagano-ken (JP)
(72) Inventor: Obara, Rikuro. c/o Minebea K.-K., Nagano-ken (JP)
(74) Representative: Warren, Anthony Robert

(56) References cited:
- EP-A- 0 591 587
- GB-A- 2 282 421

## Description

The present invention relates to a compound bearing assembly and a method of manufacturing the same. The compound bearing assembly may be used in the rotating portions of a computer and/or its peripheral devices.

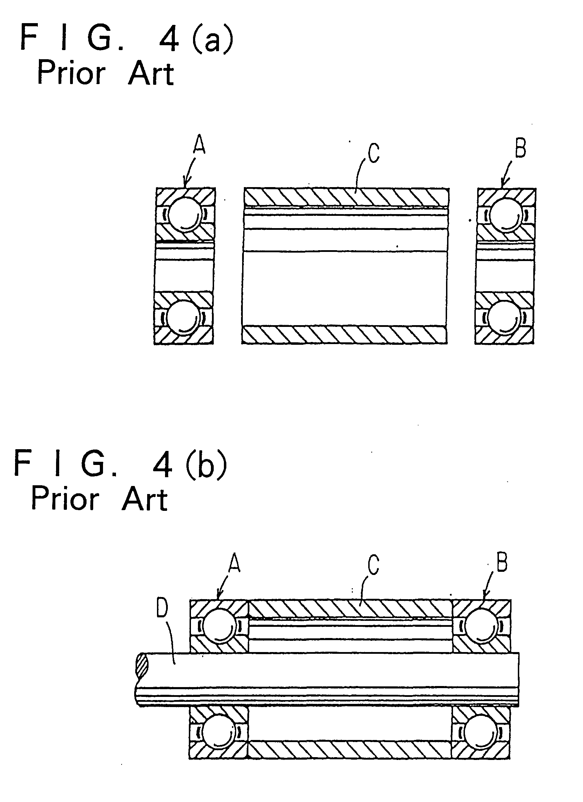

In a conventional compound bearing assembly, in which a pair of ball bearing units A, B are mounted on a rotary shaft D of rotating portions of a computer or its peripheral devices, as shown in Figs. 4(a) and (b), it is necessary to produce the components of the assembly separately. Consequently, a sleeve-like spacer C and the pair of the ball bearing units A, B are produced separately from each other. These components A, B, C of the conventional compound bearing assembly are then delivered to a user. After receipt of the components, the user mounts the components A, B, C on the rotary shaft D to complete the conventional compound bearing assembly, as shown in Fig. 4(b).

As described above, in the conventional compound bearing assembly, it is necessary for the user, or customer, such as the manufacturer or assembler of the computers or peripheral devices, to mount the pair of ball bearings units A, B and the spacer C on the rotary shaft D with the ball bearing units A, B spaced apart from each other by the spacer C. Consequently, the conventional compound bearing assembly suffers from the following problems:
(a) While it needs to possess sufficient rigidity, the rotary shaft D is also required to have an outer diameter which is small enough to cooperate with the inner race rings of the ball bearing units A, B;
(b) Since the spacer C is a separate component independent of the pair of ball bearing units A and B, it is necessary for the opposite end surfaces of the spacer C to be machined or otherwise worked to improve their mutual parallelism and also their flatness, in relation to the dimensions of the ball bearing units A, B being assembled together with the spacer C; and
(c) Since the spacer C is merely sandwiched between the outer race rings of the two ball bearing units A and B, it is necessary for the user to coaxially mount the spacer C on the rotary shaft D with a high degree of accuracy. This requires the spacer C to have its opposite axial end surfaces brought into uniform contact with axially inner end surfaces of the outer race rings of the ball bearing units A, B, which involves much time and labour.

A further prior art bearing assembly is disclosed in patent EP-A-0 591 587 (on which the preambles of the independent claims are based). The bearing assembly depicted in Fig. 6 of the above patent includes a stepped shaft, with larger and smaller diameter portions, journalled for rotation by means of first and second rows of balls within a sleeve. The first row of balls runs between an inner raceway groove formed in an outer surface of the larger shaft portion and an outer raceway groove formed in an inner surface of the sleeve. The second row of balls runs between an inner raceway groove in an inner ring mounted on the smaller shaft portion and an outer raceway groove formed in an inner surface of a separate outer ring mounted in an annular recess in the interior of the sleeve. The outer diameter of the inner ring is the same as that of the larger shaft portion. As a consequence of the above arrangement, the balls of the first row have larger diameters than those of the second row.

A still further prior art compound bearing assembly is disclosed in patent GB-A-2,282,421. The bearing assembly depicted in Fig. 25 of this patent includes two rows of balls of different diameters which run between a stepped shaft and outer raceway rings, the outer diameters of which are different. One of the rows of balls runs round an axially displaceable inner raceway ring mounted on a smaller diameter portion of the shaft. The compound bearing accordingly needs to be assembled into a relatively complicated stepped diameter aperture by the manufacturer of the equipment in which the compound bearing is to be installed.

It is an object of the present invention to alleviate or effectively solve the above problems by providing a compound bearing assembly and a method of manufacturing the same, the compound bearing assembly being capable of being easily mounted in rotating portions of a computer and/or its peripheral devices at the user's end or production line.

According to a first aspect of the present invention, there is provided a compound bearing assembly, wherein
(a) a stepped-diameter shaft is provided with a portion having a larger diameter than another portion of the shaft, an inner raceway groove formed directly in the outer peripheral surface of the larger-diameter portion, and an inner race ring, having an inner raceway groove is mounted on the smaller-diameter portion;
(b) an outer diameter of said inner race ring is equal to an outer diameter of said larger-diameter portion of said shaft;
(c) said shaft is encircled by a sleeve-like outer race ring which is provided with an outer raceway groove in the inner peripheral surface of one of its axially opposite ends, and at the other of said axial ends is provided with a separate or single-piece outer race ring having an outer raceway groove, said outer race ring is axially aligned with said sleeve-like outer race ring;
(d) a plurality of first balls rotatably mounted in said inner raceway groove of said larger-diameter portion of said shaft are held by the outer raceway groove of one of said sleeve-like outer race ring and said separate outer race ring, and a plurality of second balls rotatably mounted in said inner raceway groove of said inner race ring are held by the outer raceway groove of the other of said sleeve-like outer race ring and said outer race ring;
characterised in that said outer race ring has an inner diameter and an outer diameter respectively equal to an inner diameter and an outer diameter of said sleeve-like outer race ring; and said first balls and said second balls have the same diameter.

According to a second aspect of the present invention, there is provided a method of manufacturing the compound bearing assembly according to the first aspect of the invention.

In one embodiment of the bearing assembly, or method, the first balls around the inner raceway groove of the larger-diameter portion of the shaft are held by the outer raceway groove of the single-piece outer race ring, and the second balls around the inner raceway groove of the single-piece outer race ring are held by an outer raceway groove of the sleeve-like outer race ring, the outer raceway groove being formed in an inner peripheral surface of the sleeve-like outer race ring.

Alternatively, the first balls around the inner raceway groove of the larger-diameter portion of the shaft may be held by the outer raceway groove of the sleeve-like outer race ring, and the second balls around the inner raceway groove of the inner race ring mounted on the smaller-diameter portion of the shaft may be held by an outer raceway groove of the outer race ring, the outer raceway groove being formed in an inner peripheral surface of the outer race ring.

According to a third aspect of the present invention, there is provided a compound bearing assembly wherein:
(a) an inner raceway groove is directly formed in an outer peripheral surface of a portion of a stepped-diameter shaft which is larger than another portion of the shaft;
(b) first balls are disposed between said inner raceway groove and an outer raceway groove which is formed around the larger-diameter portion;
(c) a ball bearing unit has an inner race ring mounted on the smaller-diameter portion of said shaft, with balls disposed between its inner race ring and an outer race ring;
(d) a sleeve-like spacer is axially aligned with said outer race ring of said ball bearing unit and said inner raceway groove;
wherein an outer diameter of said inner race ring is equal to an outer diameter of said larger-diameter portion of said shaft, characterised in that :
(i) said outer raceway groove is formed in an inner peripheral surface of a separate or single-piece outer ring; (ii) said sleeve-like spacer is axially aligned with said separate outer ring and is situated between said separate outer ring and said outer race ring of said ball bearing unit;
(iii) said sleeve-like spacer has inner and outer diameters equal to inner and outer diameters respectively of said separate outer ring and said outer race ring of said ball bearing unit; and
(iv) said first balls and said second balls have the same diameter.

According to a fourth aspect of the present invention, there is provided a method of manufacturing the compound bearing assembly according to the third aspect of the invention.

Reference will now be made to the accompanying drawings, in which:-
Fig. 1 is a longitudinal sectional view of a first embodiment of a compound bearing assembly of the present invention;
Fig. 2 is a longitudinal sectional view of a second embodiment of a compound bearing assembly of the present invention;
Fig. 3 is a longitudinal sectional view of a third embodiment of a compound bearing assembly of the present invention;
Fig. 4(a) is a longitudinal sectional view of the components of a conventional compound bearing assembly, i.e., a pair of ball bearing units and a spacer, from which the compound bearing assembly is assembled; and
Fig. 4(b) is a longitudinal sectional view of the conventional compound bearing assembly after completion of assembly work thereof, with the ball bearing units and the spacer properly mounted on a shaft.

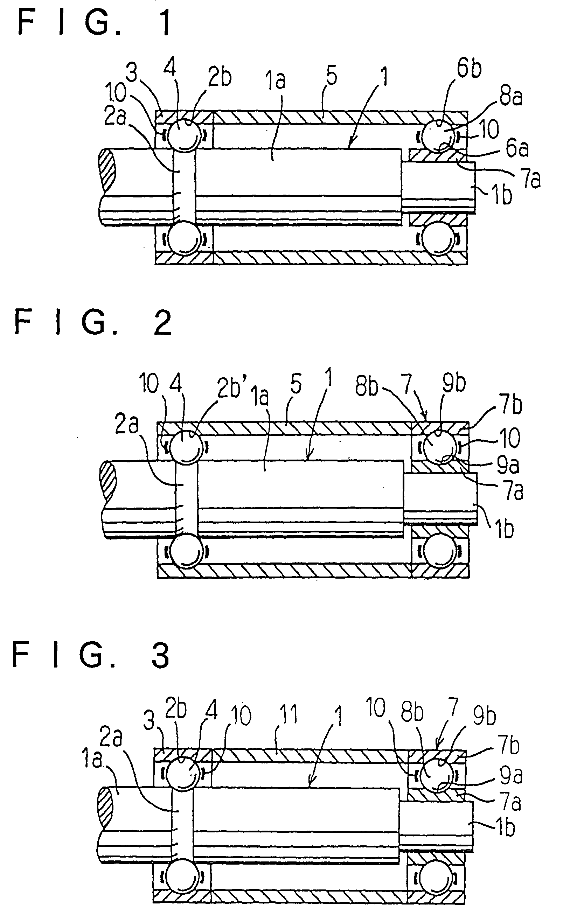

Fig. 1 shows a first embodiment of a compound bearing assembly of the present invention.

As shown in Fig. 1, a stepped-diameter shaft 1 is provided with a relatively large-diameter portion 1a and a relatively small-diameter portion 1b. An annular inner raceway groove 2a is formed directly in the outer peripheral surface of the large-diameter portion 1a.

A single-piece, separate or discrete outer race ring 3 is disposed opposite the inner raceway groove 2a, and is provided with an annular outer raceway groove 2b in its inner peripheral surface. A plurality of first balls 4 are rotatably mounted between the inner raceway groove 2a of the shaft 1 and the outer raceway groove 2b of the outer race ring 3.

As is clear from Fig. 1, a sleeve-like outer race ring 5 is provided with an annular outer raceway groove 6b in the inner peripheral surface of its outer-end portion remote from the outer race ring 3 (i.e., its right-hand portion as viewed in Fig. 1). This outer raceway groove 6b of the outer race ring 5 is disposed opposite an inner race ring 7a. This inner race ring 7a is mounted on the small-diameter portion 16 of the stepped-diameter shaft 1 in an insertion manner, and is provided with an annular inner raceway groove 6a in its outer peripheral surface. A plurality of second balls 8a are rotatably mounted between the outer raceway groove 6b of the sleeve-like outer race ring 5 and the inner raceway groove 6a of the inner race ring 7a.

The outer diameter of the inner race ring 7a mounted on the small-diameter portion 16 of the stepped-diameter shaft 1 is equal to the outer diameter of the large-diameter portion 1a of the shaft 1. Consequently, the first balls 4 and the second balls 8a are of the same diameter.

In this first embodiment of the compound bearing assembly, during its assembly, for example, the outer race ring 3 and associated balls 4 are assembled to the inner raceway groove 2a, the outer race ring or sleeve 5 and associated balls 8a are assembled to the inner race ring 7a, and the inner race ring 7a is slidably mounted on the small-diameter portion 1b of the shaft 1 in an insertion manner. Then, a predetermined pre-load is axially inwardly applied to the outer-end surface (i.e., right-hand end surface as viewed in Fig. 1) of the inner race ring 7a. Under such circumstances, the inner race ring 7a is bonded or anchored to the small-diameter portion 1b of the shaft 1 by means of a suitable adhesive or like connecting means, and/or is a press-or interference-fit thereon. Thus the outer race ring 3, sleeve-like outer race ring 5, inner race ring 7a and the remaining components are assembled on the stepped-diameter shaft 1 to form the first embodiment of the compound bearing assembly.

In Fig. 1, the reference numeral 10 denotes ball retainers or cages for the balls 4 and 8a, arranged coaxially with the stepped-diameter shaft 1 so as to be mounted around the shaft 1.

Fig. 2 shows a second embodiment of the compound bearing assembly of the present invention.

In this second embodiment, like the first embodiment, the inner raceway groove 2a is formed directly in the outer peripheral surface of the large-diameter portion 1a of the stepped-diameter shaft 1. However, instead of providing the separate or discrete outer race ring 3 of the first embodiment, the sleeve-like outer race ring 5 is provided with an annular outer raceway groove 2b' in the inner peripheral surface of its opposite outer-end portion (i.e., its left-hand portion as viewed in Fig. 2), which is disposed opposite the inner raceway groove 2a. A plurality of first balls 4 are rotatably mounted between the raceway grooves 2b' and 2a.

A conventional separate ball bearing unit 7 is mounted at the opposite end of the sleeve-like outer ring 5. This unit comprises an outer race ring 7b, an inner race ring 7b, a plurality of third balls 8b rotatably mounted between these race rings 7b, 7a in grooves 9a, 9b, and a ball retainer 10. The inner race ring 7b is fixedly mounted on the small-diameter portion 1b of the stepped-diameter shaft 1 as in the first embodiment.

Further, as is clear from Fig. 2, the outer diameter of the inner race ring 7a of the ball bearing unit 7 is the same as that of the large-diameter portion 1a of the shaft 1, while the outer and inner diameters of the outer race rings 7b and 5 are the same. Consequently, the balls 4, 8b are of the same diameter.

In this second embodiment, during its assembly, for example, the sleeve-like outer ring 5 and associated balls are assembled to the inner raceway groove 2a, and the inner race ring 7a of the separate ball bearing unit 7 is slid onto the small-diameter portion 1b of the shaft 1. Then, a predetermined pre-load is axially inwardly applied to the outer-end surface (i.e., a right-hand end surface as viewed in Fig. 2) of the inner race ring 7a, and the inner race ring 7a is bonded or otherwise anchored to the small-diameter portion 1b of the shaft 1, for example by means of a suitable adhesive, or other means. Thus the sleeve-like outer race ring 5, outer race ring 7b, inner race ring 7a and the remaining components are assembled on the stepped-diameter shaft 1 to form the second embodiment of the compound bearing assembly.

Fig. 3 shows a third embodiment of the compound bearing assembly of the present invention.

This third embodiment of the compound bearing assembly is assembled on the stepped-diameter shaft 1 which, as in the previous embodiments, is provided with the annular inner raceway groove 2a in the large-diameter portion 1a of its outer peripheral surface. In the third embodiment, as in the first embodiment, a single-piece, discrete or separate outer race ring 3 is provided with the annular outer raceway groove 2b in its inner peripheral surface, and is coaxially mounted around the large-diameter portion 1a of the stepped-diameter shaft 1 while being spaced apart from the large-diameter portion 1a to define an annular space therebetween. Rotatably mounted in this annular space are a plurality of first balls 4.

As in the second embodiment, a conventional ball bearing unit 7, which comprises an outer race ring 7b, inner race ring 7a, a plurality of third balls 8b rotatably mounted between the race rings 7b and 7a, and the ball retainer 10, is mounted by its inner race ring 7a on the small-diameter portion 1b of the shaft 1. A sleeve-like spacer 11 is fixedly sandwiched between the single-piece or separate outer race rings 3 and 7b so as to be arranged coaxially with the shaft 1.

The outer diameter of the inner race ring 7a of the ball bearing unit 7 is equal to that of the large-diameter portion 1a of the stepped-diameter shaft 1. Further, the outer and inner diameters of the outer race rings 7b and 3 are the same. Consequently, the first balls 4 and the second balls 6 are of the same diameter.

Also in this third embodiment, as in the second embodiment, the inner race ring 7a is axially slid onto the small-diameter portion 1b of the shaft 1, pre-loaded, and bonded or otherwise fixed to the shaft.

Although the balls 4, 8a, 8b are of the same diameter in any one of the above embodiments, it is also possible to use first balls 4 which have a different diameter from the other balls 8a and 8b.

The compound bearing assemblies embodying the present invention and constructed as described above have the following actions and effects:
(1) Since the components such as the single-piece or separate outer race ring 3, balls 4, sleeve-like spacer 5 or 11, ball bearing unit 7 and the like are already assembled on the stepped-diameter shaft 1, for example by a bearing maker, to form the compound bearing assembly or unit, the user of the assembly, for example the manufacturer of the computers and/or peripheral devices, is relieved of the cumbersome work of assembling the compound bearing assembly. Thus, the compound bearing assembly may be easily mounted inside a sleeve-like rotating element of a desired instrument by the user, by inserting the assembly into the rotating element and fixing the assembly therein;
(2) Since the compound bearing assembly uses a stepped-diameter shaft 1 provided with a large-diameter portion 1a having its outer peripheral surface directly formed with the annular inner raceway groove 2a, instead of a conventional type of inner race ring which would require the diameter of the shaft to be reduced, the rigidity of the shaft is improved;
(3) Since the stepped-diameter shaft 1 is provided with the large-diameter portion 1a, and, therefore possesses increased rigidity, it is possible to increase the resonance point of a spindle or drive motor which is associated with the compound bearing assembly and used in office automation instruments and like systems, so that the spindle motor provided may be prevented from resonating to, or inducing resonance in, the remaining components of the instruments, whereby these instruments are improved in reliability;
(4) No conventional ball bearing units are used in the compound bearing assembly of the embodiment of Fig. 1, and only one, i.e. the ball bearing unit 7, is used in the embodiments of Figs. 2 and 3. Consequently, each of the compound bearing assemblies embodying the present invention uses only one inner race ring 7a, and therefore has fewer components in comparison with conventional compound bearing assemblies; and
(5) The sleeve-like outer race ring 5 and the spacer 11 may be fabricated by the bearing maker so as to align with the ball bearing unit 7 and/or the separate outer race ring 3, with a high degree of accuracy.

In each of the first and second embodiments of the compound bearing assembly of the present invention, a sleeve-like outer race ring 5 serves as both a conventional outer race ring and a sleeve-like spacer. Consequently, the following further actions and effects are obtained:
(6-1) Since the sleeve-like outer race ring 5 also serves as a spacer, it is possible to eliminate a conventional independent spacer, which makes it possible to reduce the number of components;
(6-2) In comparison with a conventional compound bearing assembly, in which a pair of ball bearing units A, B are disposed on axially opposite sides of the spacer C, it is possible to reduce the overall axial length of the compound bearing assembly embodying the present invention, which makes is possible to downsize the instruments provided with compound bearing assemblies embodying the present invention; and
(6-3) One of the axially opposite end surfaces of the sleeve-like outer race ring 5 must be machine-finished so as to be brought into uniform contact with the axially inward end surface of the outer race ring 3 or 7b. However, the other of the axially opposite end surfaces of the sleeve-like outer race ring 5 may remain unmachined, which permits a reduction in the number of process steps in the manufacture of the compound bearing assembly.

## Claims

1. A compound bearing assembly, wherein
(a) a stepped-diameter shaft (1) is provided with a portion (1a) having a larger diameter than another portion (1b) of the shaft, an inner raceway groove (2a) formed directly in the outer peripheral surface of the larger-diameter portion (1a), and an inner race ring (7a), having an inner raceway groove (6a or 9a) is mounted on the smaller-diameter portion (1b);
(b) an outer diameter of said inner race ring (7a) is equal to an outer diameter of said larger-diameter portion (1a) of said shaft (1);
(c) said shaft (1) is encircled by a sleeve-like outer race ring (5) which is provided with an outer raceway groove (6b, 2b') in the inner peripheral surface of one of its axially opposite ends, and at the other of said axial ends is provided with a separate or single-piece outer race ring (3 or 7b) having an outer raceway groove (2b or 9b), said outer race ring (3 or 7b) is axially aligned with said sleeve-like outer race ring (5);
(d) a plurality of first balls (4) rotatably mounted in said inner raceway groove (2a) of said larger-diameter portion (1a) of said shaft (1) are held by the outer raceway groove (2b', 2b) of one of said sleeve-like outer race ring (5) and said separate outer race ring (3), and a plurality of second balls (8a or 8b) rotatably mounted in said inner raceway groove (6a, 9a) of said inner race ring (7a) are held by the outer raceway groove (6b, 9b) of the other of said sleeve-like outer race ring (5) and said outer race ring (7b);
**characterised in that** :
said outer race ring (3 or 7b) has an inner diameter and an outer diameter respectively equal to an inner diameter and an outer diameter of said sleeve-like outer race ring (5); and
said first balls (4) and said second balls (8a) have the same diameter.

2. The compound bearing assembly as claimed in claim 1 wherein:
said first balls (4) around said inner raceway groove (2a) of said larger-diameter portion (1a) are held by said outer raceway groove (2b) of said separate outer race ring (3); and
said second balls (8a) around said inner raceway groove (6a) of said inner race ring (7a) mounted on said smaller-diameter portion (1b) are held by said outer raceway groove (6b) of said sleeve-like outer race ring (5).

3. The compound bearing assembly as claimed in claim 1 wherein:
said first balls (4) around said inner raceway groove (2a) of said larger-diameter portion (1a) are held by said outer raceway groove (2b') of said sleeve-like outer race ring (5); and
said second balls (8b) around said inner raceway groove (9a) of said inner race ring (7a) mounted on said smaller-diameter portion (1b) are held by said outer raceway groove (9b) formed in the inner peripheral surface of said outer race ring (7b).

4. A method of manufacturing a compound bearing assembly wherein:
a stepped-diameter shaft (1) is provided with a portion (1a) having a larger diameter than another portion (1b) of the shaft, an inner raceway groove (2a) formed directly in the outer peripheral surface of the larger-diameter portion (1a) and an inner race ring (7a) having an inner raceway groove (6a or 9a) is slidably mounted on the smaller-diameter portion (1b);
an outer diameter of said inner race ring (7a) is equal to an outer diameter of said larger-diameter portion (1a) of said shaft (1) ;
said stepped-diameter shaft (1) is encircled by a sleeve-like outer race ring (5) which is provided with an outer raceway groove (6b, 2b') in the inner peripheral surface of one of its axially opposite ends, and at the other of said axial ends is provided with a separate or single-piece outer race ring (3 or 7b) having an outer raceway groove (2b or 9b);
said outer race ring (3 or 7b) being axially aligned with said sleeve-like outer race ring (5);
a plurality of first balls (4) rotatably mounted in said inner raceway groove (2a) of said larger-diameter portion (1a) of said shaft (1) are held by the outer raceway groove (2b', 2b) of one of said sleeve-like outer race ring (5) and said separate outer race ring (3), and a plurality of second balls (8a or 8b) rotatably mounted in said inner raceway groove (6a, 9a) of said inner race ring (7a) are held by the outer raceway groove (6b, 9b) of the other of said sleeve-like outer race ring (5) and said outer race ring (7b),
in a condition in which a predetermined pre-load is applied to an outer end portion of said inner race ring (7a) or of said sleeve-like outer race ring (5), said inner race ring (7a) is firmly bonded or otherwise fixed to said smaller-diameter portion (1b) of said stepped-diameter shaft (1) by means of an adhesive or other connecting means;
whereby the components such as said sleeve-like outer race ring (5), separate outer race ring (3), inner race ring (7a) and the like are assembled together with said stepped-diameter shaft (1) into a compound bearing assembly,
**characterised in that** :
said outer race ring (3 or 7b) has an inner diameter and an outer diameter respectively equal to an inner diameter and an outer diameter of said sleeve-like outer race ring (5); and
said first balls (4) and said second balls (8a) have the same diameter.

5. The method of manufacturing the compound bearing assembly, as claimed in claim 4, wherein:
said first balls (4) around said inner raceway groove (2a) of said larger-diameter portion (1a) are held by said outer raceway groove (2b) of said separate outer race ring (3); and
said second balls (8a) around said inner raceway groove (6a) of said inner race ring (7a) are held by said outer raceway groove (6b) of said sleeve-like outer race ring (5), said outer raceway groove (6b) being formed in the inner peripheral surface of said sleeve-like outer race ring (5).

6. The method of manufacturing the compound bearing assembly, as claimed in claim 4, wherein :
said first balls (4) around said inner raceway groove (2a) of said larger-diameter portion (1a) are held by said outer raceway groove (2b') of said sleeve-like outer race ring (5); and
said second balls (8b) around said inner raceway groove (9a) of said inner race ring (7a) mounted on said smaller-diameter portion (1b) are held by said outer raceway groove (9b) of said outer race ring (7b), said outer raceway groove (9b) being formed in the inner peripheral surface of said outer race ring (7b).

7. A compound bearing assembly wherein:
(a) an inner raceway groove (2a) is directly formed in an outer peripheral surface of a portion (1a) of a stepped-diameter shaft (1) which is larger than another portion (1b) of the shaft;
(b) first balls (4) are disposed between said inner raceway groove (2a) and an outer raceway groove (2b) which is formed around the larger-diameter portion (1a) ;
(c) a ball bearing unit (7) has an inner race ring (7a) mounted on the smaller-diameter portion (1b) of said shaft (1), with balls (8b) disposed between its inner race ring (7a) and an outer race ring (7b) ;
(d) a sleeve-like spacer (11) is axially aligned with said outer race ring (7b) of said ball bearing unit (7) and said inner raceway groove (2a) ;
wherein an outer diameter of said inner race ring (7a) is equal to an outer diameter of said larger-diameter portion (1a) of said shaft (1),
**characterised in that** :
(i) said outer raceway groove (2b) is formed in an inner peripheral surface of a separate or single-piece outer ring (3);
(ii) said sleeve-like spacer (11) is axially aligned with said separate outer ring (3) and is situated between said separate outer ring (3) and said outer race ring (7b) of said ball bearing unit (7) ;
(iii) said sleeve-like spacer (11) has inner and outer diameters equal to inner and outer diameters respectively of said separate outer ring (3) and said outer race ring (7b) of said ball bearing unit (7);
(iv) said first balls (4) and said second balls (8b) have the same diameter.

8. A method of manufacturing a compound bearing assembly wherein :
an inner raceway groove (2a) is directly formed in an outer peripheral surface of a portion (1a) of a stepped-diameter shaft (1) which is larger than another portion (1b) of the shaft;
first balls (4) are disposed between said inner raceway groove (2a) and an outer raceway groove (2b) which is formed around the larger-diameter portion (1a);
a ball bearing unit (7) has an inner race ring (7a) slidably mounted on the smaller-diameter portion (1b) of said shaft (1) with balls (8b) disposed between its inner race ring (7a) and an outer race ring (7b) ;
a sleeve-like spacer (11) is axially aligned with said outer race ring (7b) of said ball bearing unit (7) and said inner raceway groove (2a) ;
wherein an outer diameter of said inner race ring (7a) is equal to an outer diameter of said larger-diameter portion (1a) of said shaft (1) ;
said inner race ring (7a) of said ball bearing unit (7) is fixed to said smaller-diameter portion (1b) of said shaft (1) by means of an adhesive or other connecting means in a condition in which a predetermined preload is applied to the outer end surface of said inner and outer race ring (7a, 7b) of said ball bearing unit (7);
whereby the components such as said sleeve-like spacer (11), ball bearing unit (7) and the like are assembled together with said stepped-diameter shaft (1) into a compound bearing assembly;
**characterised in that** :
(i) said outer raceway groove (2b) is formed in an inner peripheral surface of a separate or single-piece outer ring (3);
(ii) said sleeve-like spacer (11) is axially aligned with said separate outer ring (3) and is situated between said separate outer ring (3) and said outer race ring (7b) of said ball bearing unit (7) ;
(iii) said sleeve-like spacer (11) has inner and outer diameters equal to inner and outer diameters respectively of said separate outer ring (3) and said outer race ring (7b) of said ball bearing unit (7); and
(iv) said first balls (4) and said second balls (8b) have the same diameter.

9. A compound bearing assembly as claimed in any one of claims 1, 2, 3 or 7 wherein said compound bearing assembly is incorporated in a rotating portion of a computer or a peripheral device therefor.

## Patentansprüche

1. Verbundlager, worin
a) eine Welle (1) mit abgestuftem Durchmesser mit einem Teil (1a) versehen ist, dessen Durchmesser größer als der des anderen Teils (1b) der Welle ist, eine Innenlaufrille (2a) direkt in der Oberfläche des Teils (1a) mit dem größeren Durchmesser ausgebildet ist und ein Innenring (7a) mit einer Innenlaufrille (6a oder 9a) auf dem Teil (1b) mit dem kleineren Durchmesser angebracht ist,
b) der Außendurchmesser des Innenrings (7a) gleich dem Außendurchmesser des Teils (1a) der Welle (1) mit dem größeren Durchmesser ist,
c) die Welle (1) von einem büchsenähnlichen Außenring (5) umgeben ist, der in der Innenfläche eines seiner axial gegenüberliegenden Enden mit einer Außenlaufrille (6b, 2b') versehen ist, wobei das andere axiale Ende mit einem separaten bzw. einteiligen Außenring (3 oder 7b) mit einer Außenlaufrille (2b oder 9b) versehen ist und der Außenring (3 oder 7b) mit dem büchsenähnlichen Außenring (5) axial ausgerichtet ist, und
d) eine Vielzahl erster Kugeln (4) in der Innenlaufrille (2a) des Teils (1a) der Welle (1) mit dem größeren Durchmesser drehbar angeordnet ist, die von der Außenlaufrille (2b', 2b) des büchsenähnlichen Außenrings (5) oder des separaten Außenrings (3) gehalten werden, und eine Vielzahl zweiter Kugeln (8a oder 8b) in der Innenlaufrille (6a, 9a) des Innenrings (7a) drehbar angeordnet ist, die von der Außenlaufrille (6b, 9b) der anderen Komponente aus büchsenähnlichem Außenring (5) oder Außenring (7b) gehalten werden,
**dadurch gekennzeichnet, dass**
der Außenring (3 oder 7b) einen Innendurchmesser und einen Außendurchmesser besitzt, die gleich dem Innendurchmesser bzw. dem Außendurchmesser des büchsenähnlichen Außenrings (5) sind, und
die Durchmesser von ersten (4) und zweiten Kugeln (8a) gleich sind.

2. Verbundlager nach Anspruch 1, worin
die ersten Kugeln (4) in der Innenlaufrille (2a) des Teils (1a) mit dem größeren Durchmesser von der Außenlaufrille (2b) des separaten Außenrings (3) gehalten werden und
die zweiten Kugeln (8a) in der Innenlaufrille (6a) des Innenrings (7a), der auf dem Teil (1b) mit dem kleineren Durchmesser angeordnet ist, von der Außenlaufrille (6b) des büchsenähnlichen Außenrings (5) gehalten werden.

3. Verbundlager nach Anspruch 1, worin
die ersten Kugeln (4) in der Innenlaufrille (2a) des Teils (1a) mit dem größeren Durchmesser von der Außenlaufrille (2b') des büchsenähnlichen Außenrings (5) gehalten werden und
die zweiten Kugeln (8b) in der Innenlaufrille (9a) des Innenrings (7a), der auf dem Teil (1b) mit dem kleineren Durchmesser angeordnet ist, von der Außenlaufrille (9b) gehalten werden, die in der Innenfläche des Außenrings (7b) ausgebildet ist.

4. Verfahren zur Herstellung eines Verbundlagers, worin
a) eine Welle (1) mit abgestuftem Durchmesser mit einem Teil (1a) versehen ist, dessen Durchmesser größer als der des anderen Teils (1b) der Welle ist, eine Innenlaufrille (2a) direkt in der Oberfläche des Teils (1a) mit dem größeren Durchmesser ausgebildet wird und ein Innenring (7a) mit einer Innenlaufrille (6a oder 9a) auf dem Teil (1b) mit dem kleineren Durchmesser gleitfähig angebracht wird,
b) der Außendurchmesser des Innenrings (7a) gleich dem Außendurchmesser des Teils (1a) der Welle (1) mit dem größeren Durchmesser ist,
c) die Welle (1) mit dem abgestuften Durchmesser von einem büchsenähnlichen Außenring (5) umgeben ist, der in der Innenfläche eines seiner axial gegenüberliegenden Enden mit einer Außenlaufrille (6b, 2b') versehen ist, wobei das andere axiale Ende mit einem separaten bzw. einteiligen Außenring (3 oder 7b) mit einer Außenlaufrille (2b oder 9b) versehen wird und der Außenring (3 oder 7b) mit dem büchsenähnlichen Außenring (5) axial ausgerichtet wird, und
d) eine Vielzahl erster Kugeln (4) in der Innenlaufrille (2a) des Teils (1a) der Welle (1) mit dem größeren Durchmesser drehbar angeordnet wird, die von der Außenlaufrille (2b', 2b) des büchsenähnlichen Außenrings (5) oder des separaten Außenrings (3) gehalten werden, und eine Vielzahl zweiter Kugeln (8a oder 8b) in der Innenlaufrille (6a, 9a) des Innenrings (7a) drehbar angeordnet wird, die von der Außenlaufrille (6b, 9b) der anderen Komponente aus büchsenähnlichem Außenring (5) oder Außenring (7b) gehalten werden,
unter der Bedingung, dass auf das äußere Ende des Innenrings (7a) oder des büchsenähnlichen Außenrings (5) eine festgelegte Vorlast aufgebracht wird, wobei der Innenring (7a) mit dem Teil (1b) mit dem kleineren Durchmesser der Welle (1) mit abgestuftem Durchmesser durch einen Klebstoff oder ein anderes Verbindungsmittel fest verbunden oder anderweitig befestigt wird,
wodurch die Komponenten wie büchsenähnlicher Außenring (5), separater Außenring (3), Innenring (7a) und dergleichen mit der Welle (1) mit abgestuftem Durchmesser zu einem Verbundlager zusammengebaut werden, **dadurch gekennzeichnet, dass**
der Außenring (3 oder 7b) einen Innendurchmesser und einen Außendurchmesser besitzt, die gleich dem Innendurchmesser bzw. dem Außendurchmesser des büchsenähnlichen Außenrings (5) sind, und
die Durchmesser von ersten (4) und zweiten Kugeln (8a) gleich sind.

5. Verfahren zur Herstellung des Verbundlagers nach Anspruch 4, worin
die ersten Kugeln (4) in der Innenlaufrille (2a) des Teils (1a) mit dem größeren Durchmesser von der Außenlaufrille (2b) des separaten Außenrings (3) gehalten werden und
die zweiten Kugeln (8a) in der Innenlaufrille (6a) des Innenrings (7a) von der Außenlaufrille (6b) des büchsenähnlichen Außenrings (5) gehalten werden, wobei die Außenlaufrille (6b) in der Innenfläche des büchsenähnlichen Außenrings (5) ausgebildet ist.

6. Verfahren zur Herstellung des Verbundlagers nach Anspruch 4, worin
die ersten Kugeln (4) in der Innenlaufrille (2a) des Teils (1a) mit dem größeren Durchmesser von der Außenlaufrille (2b') des büchsenähnlichen Außenrings (5) gehalten werden und
die zweiten Kugeln (8b) in der Innenlaufrille (9a) des Innenrings (7a), der auf dem Teil (1b) mit dem kleineren Durchmesser angeordnet ist, von der Außenlaufrille (9b) des Außenrings (7b) gehalten werden, die in der Innenfläche des Außenrings (7b) ausgebildet ist.

7. Verbundlager, worin
a) eine Innenlaufrille (2a) direkt in der Oberfläche des Teils (1a) einer Welle (1) mit abgestuftem Durchmesser ausgebildet ist, der größer als der andere Teil (1b) der Welle ist,
b) erste Kugeln (4) zwischen der Innenlaufrille (2a) und einer Außenlaufrille (2b) angeordnet sind, die um den Teil (1a) mit dem größeren Durchmesser ausgebildet ist,
c) eine Kugellagereinheit (7) einen Innenring (7a) besitzt, der auf dem Teil (1b) der Welle (1) mit dem kleineren Durchmesser angebracht ist, wobei zwischen ihrem Innenring (7a) und einem Außenring (7b) Kugeln (8b) angeordnet sind, und
d) ein büchsenähnlicher Abstandshalter (11) mit dem Außenring (7b) der Kugellagereinheit (7) und der Innenlaufrille (2a) axial ausgerichtet ist,
wobei der Außendurchmesser des Innenrings (7a) gleich dem Außendurchmesser des Teils (1a) der Welle (1) mit dem größeren Durchmesser ist,
**dadurch gekennzeichnet, dass**
I) die Außenlaufrille (2b) in der Innenfläche eines separaten oder einteiligen Außenrings (3) ausgebildet ist,
II) der büchsenähnliche Abstandshalter (11) mit dem separaten Außenring (3) axial ausgerichtet ist und sich zwischen separatem Außenring (3) und Außenring (7b) der Kugellagereinheit (7) befindet,
III) Innen- und Außendurchmesser des büchsenähnlichen Abstandshalters (11) gleich dem Innen- bzw. Außendurchmesser des separaten Außenrings (3) und des Außenrings (7b) der Kugellagereinheit (7) sind und
IV) die Durchmesser der ersten (4) und zweiten Kugeln (8b) gleich sind.

8. Verfahren zur Herstellung eines Verbundlagers, worin
eine Innenlaufrille (2a) direkt in der Oberfläche des Teils (1a) einer Welle (1) mit abgestuftem Durchmesser ausgebildet wird, der größer als der andere Teil (1b) der Welle ist,
erste Kugeln (4) zwischen der Innenlaufrille (2a) und der Außenlaufrille (2b), die um den Teil (1a) mit dem größeren Durchmesser ausgebildet ist, angeordnet werden,
eine Kugellagereinheit (7) einen Innenring (7a) besitzt, der auf dem Teil (1b) der Welle (1) mit dem kleineren Durchmesser gleitfähig angebracht ist, wobei zwischen ihrem Innenring (7a) und Außenring (7b) Kugeln (8a) angeordnet werden,
ein büchsenähnlicher Abstandshalter (11) mit dem Außenring (7b) der Kugellagereinheit (7) und der Innenlaufrille (2a) axial ausgerichtet wird,
wobei der Außendurchmesser des Innenrings (7a) gleich dem Außendurchmesser des Teils (1a) der Welle (1) mit dem größeren Durchmesser ist,
der Innenring (7a) der Kugellagereinheit (7) auf dem Teil (1b) der Welle (1) mit dem kleineren Durchmesser durch einen Klebstoff oder ein anderes Verbindungsmittel unter der Bedingung angebracht wird, dass auf das äußere Ende von Innen- und Außenring (7a, 7b) der Kugellagereinheit (7) eine festgelegte Vorlast aufgebracht wird,
wodurch die Komponenten wie büchsenähnlicher Abstandshalter (11), Kugellagereinheit (7) und dergleichen mit der Welle (1) mit abgestuftem Durchmesser zu einem Verbundlager zusammengebaut werden, **dadurch gekennzeichnet, dass**
I) die Außenlaufrille (2b) in der Innenfläche eines separaten oder einteiligen Außenrings (3) ausgebildet wird,
II) der büchsenähnliche Abstandshalter (11) mit dem separaten Außenring (3) axial ausgerichtet wird und sich zwischen separatem Außenring (3) und Außenring (7b) der Kugellagereinheit (7) befindet,
III) Innen- und Außendurchmesser des büchsenähnlichen Abstandshalters (11) gleich dem Innen- bzw. Außendurchmesser des separaten Außenrings (3) und des Außenrings (7b) der Kugellagereinheit (7) sind und
IV) die Durchmesser der ersten (4) und zweiten Kugeln (8b) gleich sind.

9. Verbundlager nach einem der Ansprüche 1, 2, 3 oder 7, wobei es in einen rotierenden Teil eines Computers oder eines Peripheriegeräts davon eingebaut ist.

## Revendications

1. Ensemble de palier composite, dans lequel
(a) un arbre à diamètre étagé (1) est muni d'une partie (1a) présentant un diamètre plus grand qu'une autre partie (1b) de l'arbre, une gorge de chemin de roulement interne (2a) formée directement dans la surface périphérique externe de la partie de plus grand diamètre (1a), et une bague interne de roulement (7a), comportant une gorge de chemin de roulement interne (6a ou 9a), est montée sur la partie de plus petit diamètre (1b) ;
(b) le diamètre externe de ladite bague interne de roulement (7a) est égal au diamètre externe de ladite partie de plus grand diamètre (1a) dudit arbre (1) ;
(c) ledit arbre (1) est encerclé par une bague externe de roulement analogue à un manchon (5), qui est munie d'une gorge de chemin de roulement externe (6b, 2b') formée dans la surface périphérique interne de l'une de ses extrémités axialement opposées, et au niveau de l'autre desdites extrémités axiales, est munie d'une bague externe de roulement séparée ou en une seule pièce (3 ou 7b) comportant une gorge de chemin de roulement externe (2b ou 9b), ladite bague externe de roulement (3 ou 7b) est axialement alignée avec ladite bague externe de roulement analogue à un manchon (5) ;
(d) une pluralité de premières billes (4), montées de façon rotative dans ladite gorge de chemin de roulement interne (2a) de ladite partie de plus grand diamètre (1a) dudit arbre (1), sont maintenues par la gorge de chemin de roulement externe (2b', 2b) de l'une parmi ladite bague externe de roulement analogue à un manchon (5) et ladite bague externe de roulement séparée (3), et une pluralité de deuxièmes billes (8a ou 8b), montées de façon rotative dans ladite gorge de chemin de roulement interne (6a, 9a) de ladite bague interne de roulement (7a), sont maintenues par la gorge de chemin de roulement externe (6b, 9b) de l'autre parmi ladite bague externe de roulement analogue à un manchon (5) et ladite bague externe de roulement (7b) ;
**caractérisé en ce que** :
ladite bague externe de roulement (3 ou 7b) présente un diamètre interne et un diamètre externe respectivement égaux à un diamètre interne et à un diamètre externe de ladite bague externe de roulement analogue à un manchon (5) ; et
lesdites premières billes (4) et lesdites deuxièmes billes (8a) ont le même diamètre.

2. Ensemble de palier composite selon la revendication 1, dans lequel :
lesdites premières billes (4) autour de ladite gorge de chemin de roulement interne (2a) de ladite partie de plus grand diamètre (1a) sont maintenues par ladite gorge de chemin de roulement externe (2b) de ladite bague externe de roulement séparée (3) ; et
lesdites deuxièmes billes (8a) autour de ladite gorge de chemin de roulement interne (6a) de ladite bague interne de roulement (7a) montée sur ladite partie de plus petit diamètre (1b) sont maintenues par ladite gorge de chemin de roulement externe (6b) de ladite bague externe de roulement analogue à un manchon (5).

3. Ensemble de palier composite selon la revendication 1, dans lequel :
lesdites premières billes (4) autour de ladite gorge de chemin de roulement interne (2a) de ladite partie de plus grand diamètre (1a) sont maintenues par ladite gorge de chemin de roulement externe (2b') de ladite bague externe de roulement analogue à un manchon (5) ; et
lesdites deuxièmes billes (8b) autour de ladite gorge de chemin de roulement interne (9a) de ladite bague interne de roulement (7a) montée sur ladite partie de plus petit diamètre (1b) sont maintenues par ladite gorge de chemin de roulement externe (9b) formée dans la surface périphérique interne de ladite bague externe de roulement (7b).

4. Procédé de fabrication d'un ensemble de palier composite, dans lequel :
un arbre à diamètre étagé (1) est muni d'une partie (1a) présentant un diamètre plus grand qu'une autre partie (1b) de l'arbre, une gorge de chemin de roulement interne (2a) formée directement dans la surface périphérique externe de la partie de plus grand diamètre (1a), et une bague interne de roulement (7a), comportant une gorge de chemin de roulement interne (6a ou 9a), est montée de manière coulissante sur la partie de plus petit diamètre (1b) ;
le diamètre externe de ladite bague interne de roulement (7a) est égal au diamètre externe de ladite partie de plus grand diamètre (1a) dudit arbre (1) ;
ledit arbre à diamètre étagé (1) est encerclé par une bague externe de roulement analogue à un manchon (5), qui est munie d'une gorge de chemin de roulement externe (6b, 2b') formée dans la surface périphérique interne de l'une de ses extrémités axialement opposées, et au niveau de l'autre desdites extrémités axiales, est munie d'une bague externe de roulement séparée ou en une seule pièce (3 ou 7b) comportant une gorge de chemin de roulement externe (2b ou 9b) ;
ladite bague externe de roulement (3 ou 7b) étant axialement alignée avec ladite bague externe de roulement analogue à un manchon (5) ;
une pluralité de premières billes (4), montées de façon rotative dans ladite gorge de chemin de roulement interne (2a) de ladite partie de plus grand diamètre (1a) dudit arbre (1), sont maintenues par la gorge de chemin de roulement externe (2b', 2b) de l'une parmi ladite bague externe de roulement analogue à un manchon (5) et ladite bague externe de roulement séparée (3), et une pluralité de deuxièmes billes (8a ou 8b), montées de façon rotative dans ladite gorge de chemin de roulement interne (6a, 9a) de ladite bague interne de roulement (7a), sont maintenues par la gorge de chemin de roulement externe (6b, 9b) de l'autre parmi ladite bague externe de roulement analogue à un manchon (5) et ladite bague externe de roulement (7b) ;
dans une condition dans laquelle une précharge prédéterminée est appliquée à une partie d'extrémité externe de ladite bague interne de roulement (7a) ou de ladite bague externe de roulement analogue à un manchon (5), ladite bague interne de roulement (7a) est fermement collée ou fixée d'une autre manière à ladite partie de plus petit diamètre (1b) dudit arbre à diamètre étagé (1) au moyen d'un adhésif ou d'un autre moyen de liaison ;
d'où il résulte que les composants tels que la bague externe de roulement analogue à un manchon (5), la bague externe de roulement séparée (3), la bague interne de roulement (7a) et analogues, sont assemblés conjointement avec ledit arbre à diamètre étagé (1) pour constituer un ensemble de palier composite,
**caractérisé en ce que** :
ladite bague externe de roulement (3 ou 7b) présente un diamètre interne et un diamètre externe respectivement égaux à un diamètre interne et à un diamètre externe de ladite bague externe de roulement analogue à un manchon (5) ; et
lesdites premières billes (4) et lesdites deuxièmes billes (8a) ont le même diamètre.

5. Procédé de fabrication de l'ensemble de palier composite selon la revendication 4, dans lequel :
lesdites premières billes (4) autour de ladite gorge de chemin de roulement interne (2a) de ladite partie de plus grand diamètre (1a) sont maintenues par ladite gorge de chemin de roulement externe (2b) de ladite bague externe de roulement séparée (3) ; et
lesdites deuxièmes billes (8a) autour de ladite gorge de chemin de roulement interne (6a) de ladite bague interne de roulement (7a) sont maintenues par ladite gorge de chemin de roulement externe (6b) de ladite bague externe de roulement analogue à un manchon (5), ladite gorge de chemin de roulement externe (6b) étant formée dans la surface périphérique interne de ladite bague externe de roulement analogue à un manchon (5).

6. Procédé de fabrication de l'ensemble de palier composite selon la revendication 4, dans lequel :
lesdites premières billes (4) autour de ladite gorge de chemin de roulement interne (2a) de ladite partie de plus grand diamètre (1a) sont maintenues par ladite gorge de chemin de roulement externe (2b') de ladite bague externe de roulement analogue à un manchon (5) ; et
lesdites deuxièmes billes (8b) autour de ladite gorge de chemin de roulement interne (9a) de ladite bague interne de roulement (7a) montée sur ladite partie de plus petit diamètre (1b) sont maintenues par ladite gorge de chemin de roulement externe (9b) de ladite bague externe de roulement (7b), ladite gorge de chemin de roulement externe (9b) étant formée dans la surface périphérique interne de ladite bague externe de roulement (7b).

7. Ensemble de palier composite, dans lequel :
(a) une gorge de chemin de roulement interne (2a) est formée directement dans une surface périphérique externe d'une partie (1a) d'un arbre à diamètre étagé (1) qui est plus grande qu'une autre partie (1b) de l'arbre ;
(b) des premières billes (4) sont disposées entre ladite gorge de chemin de roulement interne (2a) et une gorge de chemin de roulement externe (2b) qui est formée autour de la partie de plus grand diamètre (1a) ;
(c) une unité de roulement à billes (7) comporte une bague interne de roulement (7a) montée sur la partie de plus petit diamètre (1b) dudit arbre (1), avec des billes (8b) disposées entre sa bague interne de roulement (7a) et une bague externe de roulement (7b) ;
(d) une entretoise analogue à un manchon (11) est axialement alignée avec ladite bague externe de roulement (7b) de ladite unité de roulement à billes (7) et ladite gorge de chemin de roulement interne (2a) ;
dans lequel le diamètre externe de ladite bague interne de roulement (7a) est égal au diamètre externe de ladite partie de plus grand diamètre (1a) dudit arbre (1),
**caractérisé en ce que** :
(i) ladite gorge de chemin de roulement externe (2b) est formée dans une surface périphérique interne d'une bague externe de roulement séparée ou d'une seule pièce (3) ;
(ii) ladite entretoise analogue à un manchon (11) est axialement alignée avec ladite bague externe de roulement séparée (3) et se situe entre ladite bague externe de roulement séparée (3) et ladite bague externe de roulement (7b) de ladite unité de roulement à billes (7) ;
(iii) ladite entretoise analogue à un manchon (11) présente des diamètres interne et externe égaux aux diamètres interne et externe respectivement de ladite bague externe de roulement séparée (3) et de ladite bague externe de roulement (7b) de ladite unité de roulement à billes (7) ;
(iv) lesdites premières billes (4) et lesdites deuxièmes billes (8b) ont le même diamètre.

8. Procédé de fabrication d'un ensemble de palier composite, dans lequel :
une gorge de chemin de roulement interne (2a) est formée directement dans une surface périphérique externe d'une partie (1a) d'un arbre à diamètre étagé (1) qui est plus grande qu'une autre partie (1b) de l'arbre ;
des premières billes (4) sont disposées entre ladite gorge de chemin de roulement interne (2a) et une gorge de chemin de roulement externe (2b) qui est formée autour de la partie de plus grand diamètre (1a) ;
une unité de roulement à billes (7) comporte une bague interne de roulement (7a) montée de manière coulissante sur la partie de plus petit diamètre (1b) dudit arbre (1), avec des billes (8b) disposées entre sa bague interne de roulement (7a) et une bague externe de roulement (7b) ;
une entretoise analogue à un manchon (11) est axialement alignée avec ladite bague externe de roulement (7b) de ladite unité de roulement à billes (7) et ladite gorge de chemin de roulement interne (2a) ;
dans lequel le diamètre externe de ladite bague interne de roulement (7a) est égal au diamètre externe de ladite partie de plus grand diamètre (1a) dudit arbre (1) ;
ladite bague interne de roulement (7a) de ladite unité de roulement à billes (7) est fixée à ladite partie de plus petit diamètre (1b) dudit arbre (1) au moyen d'un adhésif ou d'un autre moyen de raccordement dans une condition dans laquelle une précharge prédéterminée est appliquée à la surface d'extrémité extérieure desdites bagues interne et externe de roulement (7a, 7b) de ladite unité de roulement à billes (7) ;
d'où il résulte que les composants tels que ladite entretoise analogue à un manchon (11), l'unité de roulement à billes (7) et analogues, sont assemblés conjointement avec ledit arbre à diamètre étagé (1) pour constituer un ensemble de palier composite ;
**caractérisé en ce que** :
(i) ladite gorge de chemin de roulement externe (2b) est formée dans une surface périphérique interne d'une bague externe de roulement séparée ou d'une seule pièce (3) ;
(ii) ladite entretoise analogue à un manchon (11) est axialement alignée avec ladite bague externe de roulement séparée (3) et se situe entre ladite bague externe de roulement séparée (3) et ladite bague externe de roulement (7b) de ladite unité de roulement à billes (7) ;
(iii) ladite entretoise analogue à un manchon (11) présente des diamètres interne et externe égaux aux diamètres interne et externe respectivement de ladite bague externe de roulement séparée (3) et de ladite bague externe de roulement (7b) de ladite unité de roulement à billes (7) ; et
(iv) lesdites premières billes (4) et lesdites deuxièmes billes (8b) ont le même diamètre.

9. Ensemble de palier composite selon l'une quelconque des revendications 1, 2, 3 ou 7, dans lequel ledit ensemble de palier composite est incorporé dans une partie rotative d'un ordinateur ou d'un dispositif périphérique de celui-ci.
